# EUROPÄISCHE PATENTANMELDUNG

(11) **EP 1 260 393 A2**
(43) Veröffentlichungstag der Anmeldung: **27.11.2002**
(21) Anmeldenummer: 02010135.8
(22) Anmeldetag: 10.05.2002
(51) Int. Cl.: B60J 7/04, B60J 10/12

(54) **Deckel für ein Schiebedach**

(30) Priorität: 21.05.2001 DE 10124807
(71) Anmelder: ArvinMeritor GmbH, 63128 Dietzenbach (DE)
(72) Erfinder: Langhoff, Hans Joachim, 38518 Gifhorn (DE); Ludwig, Matthias, 38159 Vechelde (DE); Birnbaum, Anja, 38158 Gifhorn (DE)
(74) Vertreter: Sties, Jochen, Dipl.-Ing.

(57) **Zusammenfassung**

Ein Deckel (10) für ein Schiebedach, mit einer Deckelplatte (12), einem Rahmen (14), der aus einem Kuststoffmaterial besteht und an der Deckelplatte angebracht ist, und einer Randspaltdichtung (18), die an den Rahmen angesteckt ist, ist dadurch gekennzeichnet, daß der Rahmen (14) mit einem umlaufenden Vorsprung (24) versehen ist, der einstückig mit dem Rahmen ausgebildet und mit mindestens einer Nase (26) versehen ist, so daß ein Hinterschnitt gebildet ist, und daß die Randspaltdichtung mit einem Klips (20) versehen ist, der den Vorsprung (24) mindestens teilweise umgreift.

## Beschreibung

Die Erfindung betrifft einen Deckel für ein Schiebedach, mit einer Deckelplatte, einem Rahmen, der aus einem Kunststoffmaterial besteht und an der Deckelplatte angebracht ist, und einer Randspaltdichtung, die an den Rahmen angesteckt ist.

Ein solcher Deckel ist aus der DE 199 23 725 C1 bekannt. Zur Anbringung der Randspaltdichtung wird eine Nut mit T-förmigem Querschnitt verwendet, die nach der Herstellung des Rahmens in dessen Rand eingefräst wird.

Nachteilig bei dem bekannten Deckel ist, daß die Randspaltdichtung nicht mit der gewünschten Genauigkeit am Rahmen angebracht werden kann. Zu den unvermeidbaren Toleranzen bei der Herstellung des Rahmens und der Randspaltdichtung kommt bei dem bekannten Deckel zusätzlich eine Toleranz beim Einfräsen der Nut hinzu. Es läßt sich daher nicht gewährleisten, daß die in die Nut eingesteckte Randspaltdichtung mit der Oberfläche des Deckels und des Rahmens bündig abschließt, wie dies aus optischen Gründen gewünscht wird Nachteilig an dem bekannten Deckel ist weiterhin der vergleichsweise hohe Aufwand bei der Fertigung.

Die Aufgabe der Erfindung besteht somit darin, einen Deckel der eingangs genannten Art zu schaffen, bei dem die Randspaltdichtung innerhalb enger Toleranzen am Rahmen angebracht werden kann, so daß sie bündig mit diesem abschließt, und der günstig hergestellt werden kann.

Zu diesem Zweck ist bei einem Deckel der eingangs genannten Art vorgesehen, daß der Rahmen mit einem umlaufenden Vorsprung versehen ist, der einstückig mit dem Rahmen ausgebildet und mit mindestens einer Nase versehen ist, so daß ein Hinterschnitt gebildet ist, und daß die Randspaltdichtung mit einem Klips versehen ist, der den Vorsprung mindestens teilweise umgreift. Auf diese Weise wird der zum Aufstecken der Randspaltdichtung erforderliche Hinterschnitt unmittelbar beim Gießen bzw. Schäumen des Rahmens ausgebildet. Die Lage des Hinterschnitts hängt somit lediglich von den Toleranzen ab, die bei der Herstellung der Schäumform für den Rahmen auftreten. Wenn die Schäumform jedoch einmal hergestellt ist, ist die Lage des Hinterschnitts bei jedem mit dieser Schäumform hergestellten Deckel nicht mehr toleranz-behaftet. Wenn die Formtrennebene der Schäumform für den Rahmen geeignet gelegt wird, ist die Entformbarkeit gewährleistet, ohne daß aufwendige Schieber verwendet werden müssen. Dies ermöglicht eine kostengünstige Herstellung.

Vorzugsweise ist vorgesehen, daß die Randspaltdichtung ein Zwei-Komponenten-Bauteil aus Kunststoff ist, wobei eine erste Komponente mit größerer Härte den Klips bildet und eine zweite Komponente mit geringerer Härte einen Dichtungsabschnitt bildet. Auf diese Weise kann die gewünschte hohe Haltekraft der Randspaltdichtung am Vorsprung des Rahmens bei gleichzeitig hoher Nachgiebigkeit in den Bereichen erzielt werden, die an zugeordneten Dichtungsflächen anliegen.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 schematisch ein Fahrzeugdach mit erfindungsgemäßem Deckel; und
- Figur 2 einen Schnitt entlang der Ebene II-II von Figur 1 durch den Rand eines erfindungsgemäßen Deckels.

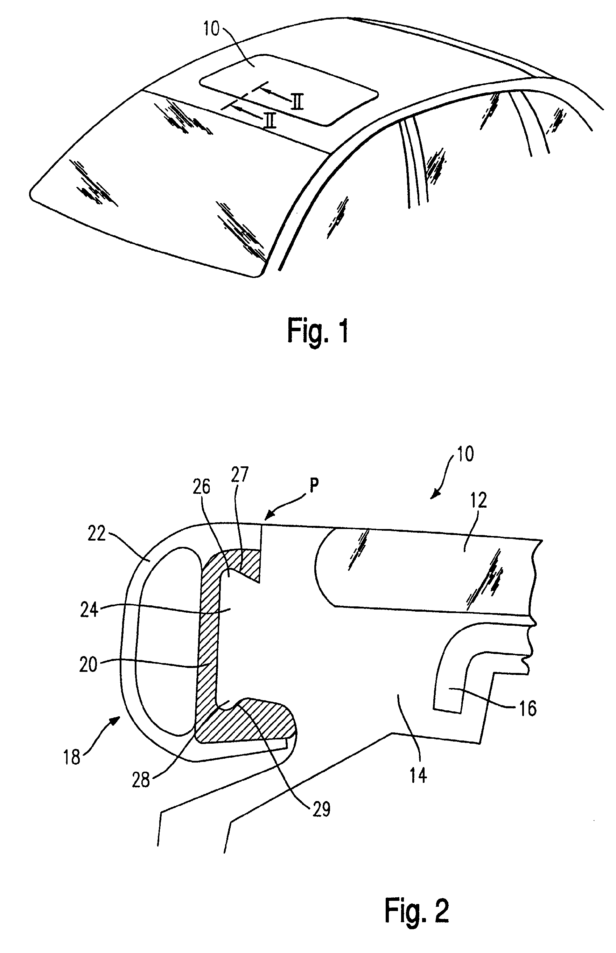

In Figur 1 ist schematisch ein Fahrzeugdach zu sehen, das mit einem Deckel 10 für ein Schiebedach versehen ist. Der Deckel kann aus der in Figur 1 gezeigten Stellung nach hinten verschoben werden, um eine Dachöffnung freizugeben.

Der Deckel 10 besteht im wesentlichen aus einer Deckelplatte 12 (siehe Figur 2) und einem Rahmen 14. Die Deckelplatte 12 kann aus Glas, einem geeigneten Kunststoffmaterial mit ausreichender Härte oder auch aus Stahlblech bestehen. Der Rahmen 14 besteht aus Kunststoff und ist mit der Deckelplatte 12 fest verbunden; zu diesem Zweck wird die Deckelplatte 12 üblicherweise mit dem Kunststoffmaterial umspritzt bzw. umschäumt. Dabei können in den Rahmen 14 Einlegeteile 16 eingelegt werden, um die Stabilität des Rahmens zu erhöhen. Dies ist jedoch für die Erfindung ohne Bedeutung.

Der Rahmen 14 ist mit einer Randspaltdichtung 18 versehen, die aus einem Klips 20 und einem Dichtungsabschnitt 22 besteht. Die Randspaltdichtung 18 besteht aus Kunststoff, und der Klips 20 und der Dichtungsabschnitt 22 bilden Komponenten mit unterschiedlicher Härte. Der Klips 20 besteht aus einem Material größerer Härte, so daß er die gewünschte Festigkeit hat, während der Dichtungsabschnitt 22 aus einem Material geringerer Härte besteht, so daß der Dichtungsabschnitt die gewünschte Elastizität hat.

Zur Anbringung der Randspaltdichtung 18 am Rahmen 14 ist der Rahmen mit einem umlaufenden Vorsprung 24 versehen, der in der Querschnittsansicht von Figur 2 eine erste Nase 26 und eine zweite Nase 28 an seinem oberen bzw. unteren Rand aufweist. Die erste Nase 26 weist eine schräg zum Rahmen 14 hin verlaufende, gerade Rückseite 27 auf, während die zweite Nase 28 eine gekrümmt zum Rahmen hin verlaufende Rückseite 29 aufweist.

Die beiden Nasen 26, 28 am Vorsprung 24 bilden jeweils einen Hinterschnitt, so daß der Klips 20 der Randspaltdichtung 18 auf den Vorsprung 24 aufgeschoben werden kann und dort einschnappt. Die Randspaltdichtung ist dadurch fest am Rahmen 14 angebracht.

Da die Position des Vorsprungs 20 relativ zum Rahmen und insbesondere zu dessen Oberseite präzise durch die zur Herstellung des Rahmens verwendete Schäumform vorgegeben ist, kann die Randspaltdichtung 18 mit sehr hoher Genauigkeit am Rahmen 14 angebracht werden. Auf diese Weise läßt sich ein bündiger, stufenloser §bergang zwischen der Randspalt-dichtung 18 und dem Rahmen 14 auf der Oberseite (an der mit dem Pfeil P bezeichneten Stelle) erreichen, der aus optischen Gründen und im Hinblick auf geringe Verschmutzungen anzustreben ist.

## Patentansprüche

1. Deckel (10) für ein Schiebedach, mit einer Deckelplatte (12), einem Rahmen (14), der aus einem Kuststoffmaterial besteht und an der Deckelplatte angebracht ist, und einer Randspaltdichtung (18), die an den Rahmen angesteckt ist,
**dadurch gekennzeichnet, daß** der Rahmen (14) mit einem umlaufenden Vorsprung (24) versehen ist, der einstückig mit dem Rahmen ausgebildet und mit mindestens einer Nase (26) versehen ist, so daß ein Hinterschnitt gebildet ist, und daß die Randspaltdichtung mit einem Klips (20) versehen ist, der den Vorsprung (24) mindestens teilweise umgreift.

2. Deckel nach Anspruch 1, **dadurch gekennzeichnet, daß** die erste Nase (26) eine schräg zum Rahmen hin verlaufende Rückseite (27) aufweist.

3. Deckel nach einem der vorhergehenden Ansprüche, **dadurch gekennzeichnet, daß** der Vorsprung (24) eine zweite Nase (28) aufweist, so daß ein zweiter Hinterschnitt gebildet ist.

4. Deckel nach Anspruch 3, **dadurch gekennzeichnet, daß** die zweite Nase (28) eine gekrümmt zum Rahmen hin verlaufende (29) Rückseite aufweist.

5. Deckel nach einem der vorhergehenden Ansprüche, **dadurch gekennzeichnet, daß** die Randspaltdichtung (18) ein 2-Komponenten-Bauteil aus Kunststoff ist, wobei eine erste Komponente mit größerer Härte den Klips (20) bildet und eine zweite Komponente mit geringerer Härte einen Dichtungsabschnitt (22) bildet.
